# EUROPEAN PATENT SPECIFICATION

(11) **EP 4 553 852 B1**
(45) Date of publication and mention of the grant of the patent: **31.12.2025**
(21) Application number: 23209048.0
(22) Date of filing: 10.11.2023
(51) Int. Cl.: G21B 1/13, C01F 3/00, C04B 35/19, C01B 33/20, G21G 1/06, G21B 1/11

(54) **A NOVEL PROCESS FOR PRODUCTION OF COMPOSITE TRITIUM BREEDER MATERIAL FOR FUSION REACTOR APPLICATION**
NEUES VERFAHREN ZUR HERSTELLUNG VON ZUSAMMENGESETZTEM TRITIUMBRÜTERMATERIAL ZUR ANWENDUNG IN EINEM FUSIONSREAKTOR
NOUVEAU PROCÉDÉ DE PRODUCTION D'UN MATÉRIAU COMPOSITE TRITIGÈNE POUR APPLICATION DANS UN RÉACTEUR DE FUSION

(43) Date of publication of application: 14.05.2025
(73) Proprietor: SECRETARY, DEPARTMENT OF ATOMIC ENERGY, 400 001 Mumbai, Maharashtra (IN)
(72) Inventor: SINHA, Amit, 400094 Mumbai (IN); NAIR, Sathi R., 400094 Mumbai (IN)
(74) Representative: Boario, Enrico

(56) References cited:
- JP-B2- 3 867 971
- WANG QIAO ET AL: "Preparation of Li2TiO3-Li4SiO4-Pb tritium breeding ceramic and its mechanical properties", CERAMICS INTERNATIONAL, ELSEVIER, AMSTERDAM, NL, vol. 48, no. 18, 1 June 2022 (2022-06-01), pages 26742 - 26749, XP087136175, ISSN: 0272-8842, [retrieved on 20220601], DOI: 10.1016/J.CERAMINT.2022.05.369
- HERN�NDEZ F.A. ET AL: "First principles review of options for tritium breeder and neutron multiplier materials for breeding blankets in fusion reactors", vol. 137, 1 December 2018 (2018-12-01), NL, pages 243 - 256, XP093109181, ISSN: 0920-3796, Retrieved from the Internet <URL:https://www.sciencedirect.com/science/article/pii/S0920379618306392/pdfft?md5=048f80d03424f836a7b8e9b54ca31013&pid=1-s2.0-S0920379618306392-main.pdf> DOI: 10.1016/j.fusengdes.2018.09.014
- RATH B N ET AL: "Thermal Conductivity of Composites of Beryllia and Lithium Titanate", JOURNAL OF MATERIALS ENGINEERING AND PERFORMANCE, ASM INTERNATIONAL, MATERIALS PARK, OH, US, vol. 22, no. 11, 31 May 2013 (2013-05-31), pages 3455 - 3460, XP035371960, ISSN: 1059-9495, [retrieved on 20130531], DOI: 10.1007/S11665-013-0606-Z
- RAYMOND ONYEKACHI ET AL: "The chemistry and metallurgy of beryllium", vol. 79, no. 3, 1 July 2015 (2015-07-01), pages 137 - 143, XP093110304, Retrieved from the Internet <URL:https://researchcommons.waikato.ac.nz/bitstream/handle/10289/9882/The%20chemistry%20and%20metallurgy%20of%20beryllium.pdf?sequence=7&isAllowed=y>

## Description

### FIELD OF THE INVENTION

The present invention belongs to fusion reactor materials and particularly relates to a process for production of composite tritium breeder material.

### BACKGROUND OF THE INVENTION

Nuclear fusion technology has the potential to become the safe and pollution free energy source which can sustain the energy demand of future. A significant feature of fusion energy is that it has the potential of being an environmentally attractive energy form. Out of the three isotopes of hydrogen (protium, deuterium and tritium), deuterium and tritium are two basic fuels in a fusion reactor. While the isotope deuterium is abundant in nature, abundance of tritium is extremely rare in nature. For a fusion reactor, employing a closed D-T fuel cycle, to be self-sustaining, it is required that the tritium production rate is equal to its consumption rate and accounts for decay and losses. For this, tritium needs to be bred inside the reactor, which is feasible through the use of lithium-based breeder material.

In a fusion reactor, the breeder material plays an important role in producing tritium atoms by a lithium transmutation, 6Li + n→ 4He + T, where n is the neutron and T is the tritium. They are also used for converting the kinetic energy of fusion neutrons into heat, and finally, shielding the components surrounding the blanket from energetic neutrons as well as photons. Lithium based oxide ceramics (LiAlO₂, Li₄SiO₄, Li₂ZrO₃ and Li₂TiO₃) have been considered as tritium breeder material in both the Helium Cooled Pebble-Bed Blanket for DEMO and the ITER Breeding Blanket due to their good thermal properties, especially high thermal conductivity, as well as satisfactory breeding characteristics.

The use of lithium containing ceramics for breeder application usually calls for a neutron multiplier, which is generally introduced as dispersion amongst the lithium containing ceramic materials. Homogeneous distribution of breeder and multiplier materials is one of the requisite parameters for better neutronics and tritium breeding performance.

For the production of tritium from solid breeder materials, the incorporation of a neutron multiplier is a requisite criterion. A neutron multiplier is introduced into the breeder blanket materials as a similarly sized particle and mixed randomly throughout the blanket.

USH259H (1986) described a breeder material comprising a core material of lithium containing ceramic particles coated with a neutron multiplier such as Be or BeO, provides a higher thermal conductivity than the core material. Several coating procedures may be employed. One such procedure used a volatile compound of Be(OH)₂, which vapor-deposited onto the breeder particle surfaces. The coated particles were then calcined to result in a coating component of BeO on the breeder particles. An alternate procedure involved the deposition of a metallic Be coating using a standard plasma spraying technique. The disclosed process is complex and it calls for several complex processing equipment and handling of beryllium-based compounds in vapor form. The process is not safe that can be translated into mass production.

RU2210819C1 described a tritium-breeding module comprised of breeding area including beryllium zone and lithium-containing ceramics zone, base plate, and gas-carrier pumping loop. The disclosed invention relates to a concept wherein breeding area is made in the form of separate blocks having separate beryllium zone and lithium-containing ceramics zone.

JP2004085360A relates to a process of production of a tritium breeder that comprises lithium titanate as a base material, and added oxides other than lithium titanate whose crystal sizes are 0.1-1 µm and whose addition rates are 1-20 mol%. The oxides comprise a titanium oxide, a niobium oxide, a vanadium oxide, an yttrium oxide, an aluminum oxide, a chromium oxide, a manganese oxide, a molybdenum oxide, a beryllium oxide, a calcium oxide, a gadolinium oxide and a zirconium oxide. The disclosed process relates to production of tritium breeder material based on Li2TiO3 containing several additives.

CN103159222B relates to a process for production of densified pellets of lithium orthosilicate based breeder material using hot isostatic pressing (HIP) technique at a temperature of 700-1000 °C, up to a pressure of 100-200 MPa. The disclosed process is highly energy intensive and not amenable for production of breeder material on commercial scale.

CN104209053A relates to a process preparation of lithium silicate microsphere through melting, atomizing, and forming. The method comprises the following steps: (1) adding raw materials for preparing lithium silicate powder into a platinum crucible; (2) heating the platinum crucible by a temperature-control program to make the raw materials carry out reactions completely, keeping on heating until the lithium silicate powder is completely melt; (3) blowing the melt lithium silicate liquid to form multiple small liquid drops, curing the small lithium silicate drops into lithium silicate microspheres; (4) sieving the obtained lithium silicate microspheres; (5) carrying out an annealing treatment on the lithium silicate microspheres. The disclosed method consists of several complex unit steps including melting of lithium silicate followed by solidification into microspheres followed by annealing heat treatment.

CN103854706A disclosed a preparation method of fusion reactor neutron multiplier-breeder material utilizing lithium hydroxide and beryllium oxide raw materials according to the proportion of 1 of Li/Be molecule mole ratio. The disclosed invention relates to a process for production of breeder-multiplier material having Li/Be molar ratio of 1 starting from lithium hydroxide and beryllium oxide as raw materials. The physical mixture of BeO and one lithium-based breeder material involves the starting raw material of beryllium as high purity BeO powder. The flowsheet of production of high purity BeO powder involves several pyro- and hydro-metallurgical operations, many of which are energy intensive and generate toxic substantial amount of solid and /or liquid waste during the production process.

JP2018009890A disclosed a fusion reactor blanket module comprising of lithium or a lithium compound, and a multiplier block containing beryllium. The disclosed process relates to production of a nuclear fusion reactor blanket subunit having a lithium containing body including a lithium or a lithium compound, a multiplication material block having a dense housing body made of beryllium to house and seal the lithium containing body.

US 2018/0050911 A1 disclosed a system and method of breeding tritium from lithium containing ceramics. The system included beryllium as neutron multiplier configured to generate neutrons. The system further includes at least one target comprising a lithium-containing material. At least one target is configured to be irradiated by some of the neutrons to produce tritium. The system further includes at least one collection structure configured to receive at least some of the tritium from the at least one target. The at least one collection structure comprises at least one gas conduit having an input configured to receive a carrier gas and an output configured to allow the carrier gas and the received tritium to flow out of the at least one gas conduit after the carrier gas has flowed along the at least one target.

Wang Qiao et al., "Preparation of Li2TiO3-Li4SiO4-Pb tritium breeding ceramic and its mechanical properties", Ceramics International, Elsevier, Amsterdam, NL, vol 48, no. 18, 1 June 2022, pages 26742-26749, disclosed neutron multiplier element, lead (Pb), mixed into Li₂TiO₃-Li4SiO₄ ceramics to synthesize the Li₂TiO₃-Li₄SiO₄-Pb ceramic powders via microwaved-induced solution combustion, employing citric acid as the fuel to composite elemental Pb into the ceramics. The ceramic powders were calcined under pure oxygen for the removal of the Li₂CO₃ impurity and the improvement of the crystallization. Compared to the conventional Li₂TiO₃-Li₄SiO₄ biphasic ceramics, the Li₂TiO₃-Li₄SiO₄-Pb ceramics sintered at 1173 K exhibits higher bending strength. It was observed that there is no significant change in the phase composition and bending strength exposure to argon with the exposure duration of up to 60 h.

Hernandez F. A. et al., "First principles review of options for tritium breeder and neutron multiplier materials for breeding blankets in fusion reactors", Fusion Engineering and Design, vol. 137, 1 December 2018, pages 243-256, disclosed that breeding blankets proposed in the different conceptual fusion power plants are based mainly on the use of Li₄SiO₄ and/ or Li₂TiO₃ as tritium breeder and Be/Be₁₂Ti as neutron multiplier. The document also assesses the tritium breeding performance of selected compounds in order to reveal new options. From the point of view of ceramic breeders, Li₈ZrO₆ has been found to outperform Li₄SiO₄ by more than 4% in terms of tritium breeding, having 6% higher melting point. From the point of view of solid neutron multipliers, Be₁₂Cr, Be₁₂V, Be₁₃Zr and Be₁₃Y show a similar performance as Be₁₂Ti, while LaPb₃, Zr₅Pb₄ and YPb₂ offer a solution for a Be-free blanket. As for liquid multipliers, Pb in combination with a ceramic breeder shows a very promising option. Moreover, Pb compounds like Pb₉₀Mn₁₀ and Pb₉₅Ba₅ offer similar performance as Pb with a lower melting point(290 °C).

Beryllium metal has been widely used candidate for neutron multiplier in most fusion breeding blankets, as disclosed in prior art where it is used in the form of pebbles. Beryllium metal exhibits several demerits for high temperature application like DEMO reactor, where the operating temperature is estimated to be 600-900 °C. Beryllium metal has a relatively low melting point (1278°C) and rather has a high chemical reactivity at high temperature. Therefore, BeO (beryllium oxide) or beryllides have been considered as better neutron multiplier materials for blanket application in the prior art documents.

There is no disclosure of prior art suggesting use of naturally occurring minerals of Beryllium instead of Beryllium Oxide. This is despite that the production of BeO from naturally occurring beryllium ore is an energy intensive multi-step process that involves several pyro- and hydro-metallurgical techniques.

However, the present invention relates to the preparation of a composite breeder material, where a naturally occurring mineral of Beryllium has been used directly, without a need of producing BeO. The present invention provides rather a safe process by not utilizing any steps related to the production of BeO and its use as multiplier along with a breeder material.

### OBJECT OF THE INVENTION

Accordingly, it is an object of the present invention to provide a simple energy-efficient process for preparing a composite tritium breeder material for application in a fusion reactor.

It is further an object of the present invention to provide a process for preparation of a composite tritium breeder material involving a solid-state synthesis technique which utilizes lithium based inorganic salt and a naturally occurring mineral of beryllium.

It is also an object of the present invention to provide a single step process for the preparation of a composite tritium breeder material.

It is yet another object of the present invention to provide a simple, safe, environment friendly and cost-effective process for mass production of tritium breeder material composite.

It is another object of the present invention to provide a three-phase composite breeder material comprising three different lithium-based breeder materials, having a neutron multiplier beryllium in one of the phase; and the process for preparation thereof.

### SUMMARY OF THE INVENTION

Accordingly, in an aspect of the present invention, there is provided a triphasic tritium breeder material composite which comprises a first, a second and a third phases, wherein the first phase and the second phase comprise at least one lithium based inorganic compound, and the third phase comprises a compound containing lithium and beryllium both.

It is further an aspect of the present invention to provide a process for preparing a triphasic tritium breeder material composite from lithium carbonate and Beryl (3BeO.Al₂O₃.6SiO₂) which comprises the steps of:
(i) mixing Lithium carbonate and Beryl in a molar ratio between Beryl:Lithium carbonate ranging from about 1:1 to about 1:20,
(ii) drying the mixture to obtain a mixed powder,
(iii) compacting the mixed powder into green pellet;
(iv) heating the green pellet in a temperature ranging from 400-1400°C; and
(v) crushing the heat-treated pellet into granules to get the three phase composite material.

### BRIEF DESCRIPTION OF THE FIGURES

Figure 1 illustrates a flowchart of production of triphasic tritium breeder material composite
Figure 2 illustrates particle size distribution of starting beryllium compound
Figure 3 illustrates XRD pattern of starting beryllium mineral
Figure 4 illustrates XRD Pattern of beryllium mineral Lithium carbonate mixture heat treated at 1100°C for 3 hours as described in example 2.

### DETAILED DESCRIPTION OF THE INVENTION

The present invention relates to a triphasic tritium breeder material composite and a process for production of composite tritium breeder material for application in nuclear fusion reactors.

The following description with reference to the accompanying drawings is provided to assist in a comprehensive understanding of various embodiments of the present disclosure as defined by the claims. It includes various specific details to assist in that understanding but these are to be regarded as merely exemplary. In addition, descriptions of well-known functions and constructions may be omitted for clarity and conciseness.

It is to be understood that the singular forms "a," "an," and "the" include plural referents unless the context clearly dictates otherwise. Thus, for example, reference to "a component surface" includes reference to one or more of such surfaces.

The terminology used herein is for the purpose of describing particular various embodiments only and is not intended to be limiting of various embodiments. It will be further understood that the terms "comprises" and/or "comprising" used herein specify the presence of stated features, integers, steps, operations, members, components, and/or groups thereof, but do not preclude the presence or addition of one or more other features, integers, steps, operations, members, components, and/or groups thereof. Also, expressions such as "at least one of," when preceding a list of elements, modify the entire list of elements and do not modify the individual elements of the list.

In an embodiment of the present invention there is provided a process for preparation of tritium breeder material.

The present invention provides a process for preparation of tritium breeder material by using a solid-state synthesis technique, comprising mixing of at least one breeder material and a neutron multiplier in a specific molar ratio.

The present invention provides preparation of a triphasic tritium breeder material composite from at least one breeder material and a neutron multiplier present.

In a preferred embodiment the breeder material is Lithium carbonate.

In a preferred embodiment the neutron multiplier is beryl (Be₃Al₂Si₆O₁₈).

The present invention provides a process for preparation of a triphasic tritium breeder material composite from lithium carbonate, and Beryl, wherein Beryl is provided in a specific molar ratio to lithium carbonate.

The present triphasic tritium breeder material composite prepared from lithium carbonate, and Beryl, wherein Beryl is provided in a molar ratio ranging from about 1:1 to about 1:20 to lithium carbonate

The process for preparation of a triphasic tritium breeder material composite from lithium carbonate and Beryl comprises the steps of:
(i) mixing lithium carbonate and Beryl in a liquid medium to obtain a mixture,
(ii) drying the mixture of step (i) at a temperature ranging from about 50°C to about 200°C to obtain a mixed powder,
(iii) compacting the mixed powder of step (ii) into pellet form;
(iv) heating the pellet of step (iii) in a temperature ranging from about 400°C to about 1400°C; and
(v) crushing the heated pellet into granules to obtain the composite.

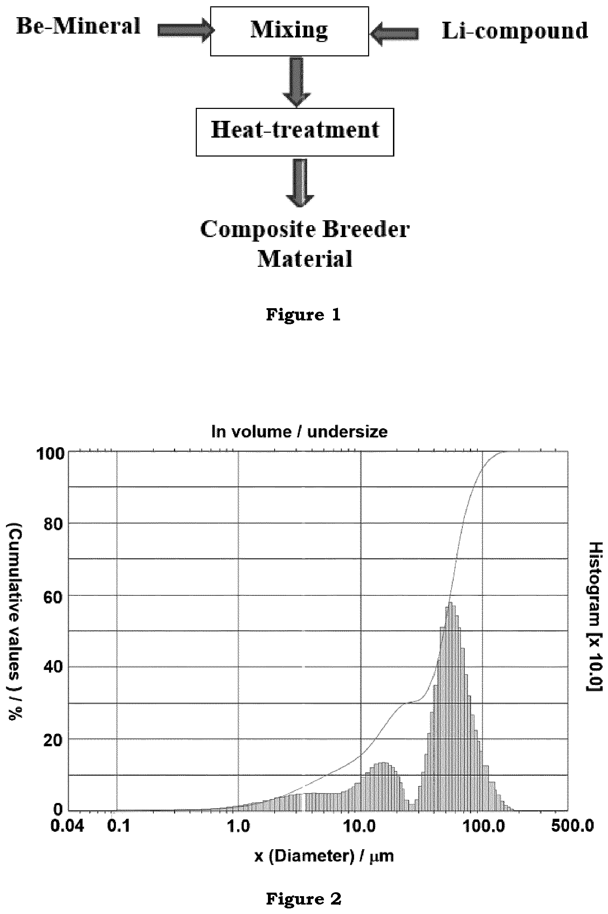

An outline of the process of the present invention for the preparation of lithium based composite material from an inorganic lithium salt (lithium carbonate) and naturally occurring beryllium mineral (Beryl) is described in Figure 1.

The preparation of triphasic tritium breeder material composite starts with the mixing of lithium carbonate and Beryl by using wet ball milling technique in a molar ratio ranging from 1:1 to 1:20 of Beryl and lithium carbonate

The finer the particle size of beryllium mineral, the better is the reaction mechanism between the particles of beryllium mineral and lithium compound. The course particle will lead to slower reaction kinetics that leads to longer time / higher temperature to complete the reaction. However, too fine particles of beryllium mineral are not desirable. The range of beryllium mineral used is 100 mesh to 400 mesh size.

The raw materials are mixed in a liquid medium selected from water, ethanol, methanol, acetone, and combinations thereof; followed by grinding in alumina grinding balls for 2 to 48 hours, preferably 24 hours.

Instead of alumina, zirconia, particularly stabilized zirconia can also be used as grinding medium. In the case of alumina, the contamination from the grinding media does not take place as the mixture being ground contains aluminum as constituent. In the case zirconia, the material coming from grinding media (ZrO₂) does not pose any problem with respect to contamination as it can react with Li₂CO₃ to from lithium zirconate which is also a tritium breeder material. However, grinding media should not be made of steel or iron-based alloy as the contamination from the grinding media would pose problem with respect to sinterability of the final composite and breeder performance.

The wet mixture obtained was dried under IR Lamp for 30 mins to 10 hours. Preferably, the wet mixture obtained was dried under IR Lamp for 1 hour.

The dried powder mix is compacted into pellets of 8 - 50 mm diameter by using a uniaxial hydraulic press. In a preferred embodiment, the diameter of the pellets is 14 mm.

The pellets are heat treated at a temperature ranging from about 400°C to about 1400°C.

The beryllium mineral (Beryl) and lithium based inorganic salt (lithium carbonate) are mixed and heat treated under different environment condition which includes air, oxygen, vacuum and inert atmosphere.

The phase composition of the heat-treated pellet was analyzed through X-ray Diffraction (XRD). The XRD results exhibit that composite material contains three phases.

The XRD results exhibit that the composite contains more than one breeder materials selected from lithium based inorganic compounds such Li-aluminate, lithium ortho-silicate, lithium meta-silicate, lithium alumino-silicate.

The composite contains distribution of breeder material in all the three phases, while the neutron multiplier is distributed along with the breeder material in one phase only. The first two phases of the composite act as breeder materials while the last one phase serves as breeder as well as neutron multiplier material.

The weight fraction of the different phases in the composite material is controlled by controlling the stoichiometry of the initial mixture of beryllium and lithium compounds. The process as described herein above is quite flexible and the process parameters can be optimized by controlling the initial molar ratio of Be-mineral and lithium compound to control the final Li/Be ratio in the end product.

Therefore, there is provided a process for preparation of a triphasic tritium breeder material composite comprising a first, a second and a third phase,
characterized in that the first phase and second phase comprise at least one lithium based inorganic compound, and the third phase comprises a lithium-beryllium based compound.

The process is cost effective as there is no use of any reagent other than Beryl and lithium carbonate used during processing of the composite.

The present invention also provides a triphasic tritium breeder material composite comprising a first phase, a second phase and a third phase,
characterized in that the first phase and the second phase comprise at least one lithium based inorganic compound, and the third phase comprises a lithium-beryllium based compound.

The composite contains at least one lithium based inorganic compounds selected from Li-aluminate, lithium ortho-silicate, lithium meta-silicate, lithium alumino-silicate.

The first phase and the second phase comprising only lithium based inorganic compound, acts as breeder material, whereas the third phase comprising the compound containing both Lithium and Beryllium acts as both breeder material and neutron multiplier.

In a preferred embodiment there is provided a process for preparation of a triphasic tritium breeder material composite from lithium carbonate and Beryl (3BeO.Al₂O₃.6SiO₂) comprising the steps of:
(i) mixing Lithium carbonate and Beryl in a molar ratio between Beryl:Lithium carbonate ranging from about of 1:1 to about 1:20 to obtain a mixture,
(ii) drying the mixture of step (i) to obtain a mixed powder,
(iii) compacting the mixed powder of step (ii) into a green pellet;
(iv) heating the green pellet of step (iii) at a temperature of 400 - 1400 °C; and
(v) crushing the heat-treated pellet of step (iv) into granules tc get the three phase composite.

The heating of the green pellet of step (iii) at a temperature of 1100°C.

The XRD results exhibit that triphasic composite material so obtained from lithium carbonate and Beryl (3BeO.Al₂O₃.6SiO₂) contains Li₄SiO₄, LiAlSiO₄ and Li₂BeSiO₄ in the first, second and third phase, respectively.

The triphasic composite material shows distribution of different types of breeder material, in its three phases, where the two phases containing Li₄SiO₄ and LiAlSiO₄ act as breeder material, while the third phase containing Li₂BeSiO₄ acts as both a breeder material and also a neutron multiplier.

The present invention also provides a triphasic tritium breeder material composite comprising a first phase, a second phase and a third phase,
characterized in that the first phase and the second phase comprise at least one lithium based inorganic compound, and the third phase comprises a compound containing both Lithium and Beryllium,
wherein the at least one lithium based inorganic compound is selected from Li₄SiO₄, and LiAlSiO₄, and the compound containing Lithium and Beryllium both is Li₂BeSiO₄.

In a more preferred embodiment there is provided a triphasic tritium breeder material composite comprising a first phase, a second phase and a third phase,
characterized in that the first phase comprises Li₄SiO₄, the second phase comprises LiAlSiO₄, and the third phase comprises Li₂BeSiO₄ and
wherein the first phase is 10 -30 % by wt. of the composite, the second phase is 20-50 % by wt. of the composite, and the third phase is 30-70% by wt. of the composite.

In a preferred embodiment, the first phase is 16.72% by wt. of the composite, the second phase is 35.16% by wt. of the composite, and the third phase is 48.12% by wt. of the composite.

Therefore, there is provided a triphasic tritium breeder material composite, prepared by using Beryl which does not generate any solid or liquid waste during processing of the breeder material and therefore is safe and environment friendly.

There is further provided a simple process for preparation of beryllium containing tritium breeder material composite, which does not generate any solid or liquid waste during processing, and therefore is suitable for mass production of the composite.

Tritium Breeding Ratio (TBR) was measured for composite compositions. TBR is an integral property of a blanket module, not an intrinsic property of a breeder material. The intrinsic property of a breeder material is to ensure that it produces tritium from the lithium ion present in its structure. TBR depends on many system physics and technology parameters other than breeder material system. To determine TBR, one must consider the "dynamics" of the entire T fuel cycle. TBR essentially depends on blanket type (solid/liquid), type of coolant (helium/water), type of breeder material, type of multiplier (Be/Be based intermetallic/Pb), structural material (RAFM) and finally temperature.

For a given composite breeder material, the TBR of a blanket depends several factors ranging from composition of different phases of the composite, their volume fraction, and the microstructural parameters with respect to average grain size of respective phases, density, open porosity etc. By controlling the process parameters of the present invention and changing the ratio of starting raw materials, it is possible to control the microstructural parameters as well as weight fraction of constituent phases in the composite.

The objects of the invention, its advantages and means for attaining the same are disclosed hereunder in greater detail with reference to non-limiting exemplary embodiments of the same. The examples are by way of illustration only and in no way restrict the scope of the invention.

### EXAMPLES

Raw Materials: Lithium salt (carbonate, nitrate, hydroxide), beryllium mineral, ethanol.

Equipment: Ball mill, Vacuum Oven, Uniaxial hydraulic press, resistance heated muffle furnace, and pestle-mortar.

### Example 1: Particle size distribution of Naturally Occurring Beryllium Mineral.

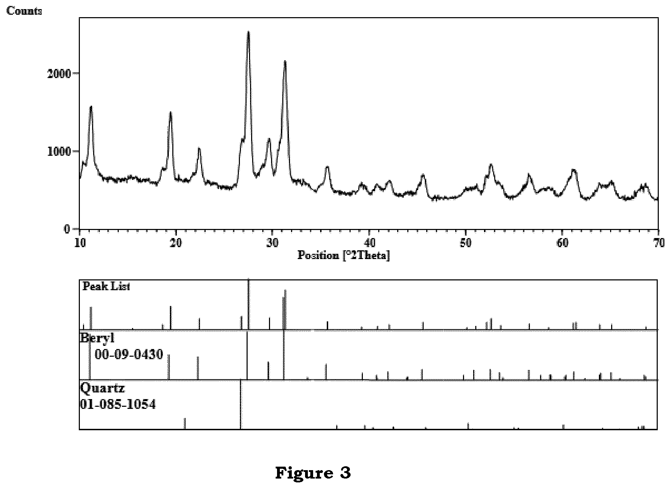

The initial beryllium mineral used in the present invention was characterized with respect to particle size distribution and phase composition through X-ray diffraction. For the experiment, -200 mesh size powder was used. The particle size distribution of starting beryllium compound is shown in Figure 2. The figure shows that the powder is bimodal and having an average particle size of 48.3 µm (D₅₀) with 90% of the particles lying below 85 µm. The XRD pattern of the beryllium mineral is shown in Figure 3. The pattern exhibits the peaks corresponding to Beryl (3BeO.Al₂O₃.6SiO₂) as major phase while quartz (SiO₂) was present as minor phase.

### Example 2: Preparation of Beryllium containing triphasic tritium breeder material composite

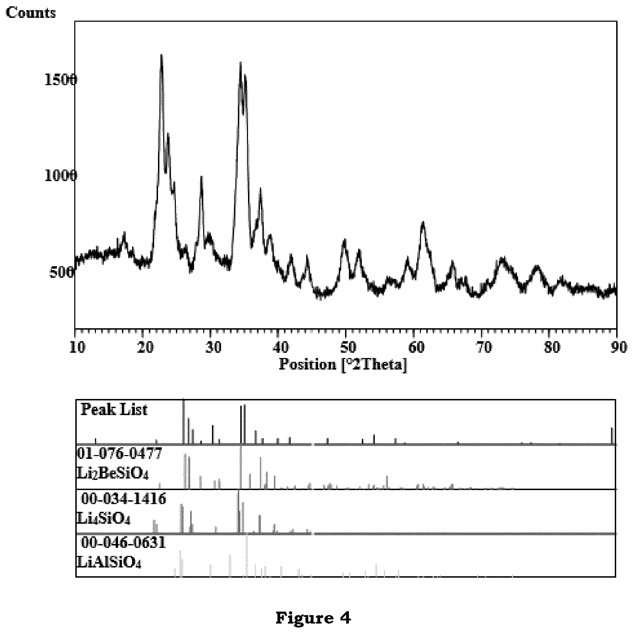

Five gram of Beryllium mineral was mixed with seven gram of lithium carbonate in wet ball mill using ethanol media and alumina grinding balls for 24 hours. The wet mixture obtained was dried under IR Lamp for 1 hour followed by consolidation using a uniaxial hydraulic press into pellets of 14 mm diameter. The pellets were heat treated at 1100°C for 3 hours. The phase composition of the heat-treated pellet was analyzed through X-ray Diffraction (XRD). The XRD results exhibit that composite material contains three phases: Li₄SiO₄, LiAlSiO₄ and Li₂BeSiO₄. The XRD pattern of the product is shown in Figure 4. The first two phases of this composite act as breeder materials while the last compound (Li₂BeSiO₄) can serve as breeder as well as neutron multiplier material.

The weight fraction of the different phases in the composite material was controlled by controlling the stoichiometry of the initial mixture of beryl and lithium compound. The weight fractions of different phases are given in Table 1:

**Table 1 Composition of the composite material**

| **Phase** | **Composition** | **Mol %** | **Wt.%** |
|---|---|---|---|
| **First** | Li₄SiO₄ | 16.67 | 16.72 |
| **Second** | LiAlSiO₄ | 33.33 | 35.16 |
| **Third** | Li₂BeSiO₄ | 50.00 | 48.12 |

### Example 3: Analysis of Tritium Breeding Ratio (TBR) of the Triphasic Composite

To estimate TBR value of the composite material of example 2, Monte Carlo N-particle transport code (MCNP) was used. The sintered density of the composite was found to be in the range of 2.02 - 2.14 g/cc which corresponds to 80-85 % of theoretical density of the composite. Using the concept of lead-lithium cooled ceramic breeder (LLCB) test blanket module (TBM) (B.K. Yadav et. al., Design updates for helium cooling system of Indian LLCB blanket, Fusion Engineering and Design, Volume 167, 2021, 112342, https://doi.org/10.1016/j.fusengdes.2021.112342), initially the simulation study was carried out. Following are the conclusions of the simulation study:
1) Tritium breeding ratio (TBR) increases with Li₆ enrichment in the lithium containing phases of the composite,
2) The variation of TBR has been found to be a weak function of sintered density of the composite material,
3) TBR of 1.07 is obtained with Li₆ enrichment of 50%.
4) TBR of 1.1 is obtained with Li₆ enrichment of 90%.

The data is tabulated in Table 2 below.

**Table 2: Estimated TBR values for different density and enrichment**

| | **TBR** | | | | | | |
|---|---|---|---|---|---|---|---|
| Li6 Enrichment (%) → | 30 | 40 | 50 | 60 | 70 | 80 | 90 |
| CB density = 2.02 g/cc | 1.041 | 1.055 | 1.065 | 1.074 | 1.083 | 1.089 | 1.094 |
| CB density = 2.07 g/cc | 1.043 | 1.057 | 1.067 | 1.076 | 1.085 | 1.091 | 1.096 |
| CB density = 2.14 g/cc | 1.046 | 1.060 | 1.071 | 1.079 | 1.088 | 1.094 | 1.101 |

The above results suggest that in LLCB TBM concept, the composite breeder could generate required value of TBR without the presence of external neutron multiplier. The required value of TBR in a TBM is >1. Similar simulation studies using MCNP without the presence of Pb-Li coolant results in lower TBR calling for a neutron multiplier material in helium cooled ceramic breeder (HCCB) TBM concept.

### Example 4: Analysis of formation of phases in the composite

The reaction mechanism for formation of different phases present in the composite has been studied by varying the molar ratio of beryl and lithium compound in the starting mixture followed by conducting heat treatment as a function of temperatures. It has been observed that thermodynamically stable phase in BeO-SiO₂-Li₂O ternary system is Li₂BeSiO₄. However, at lower processing temperatures, different transient phases could form. The fraction of LiAlSiO₄ content in the composite depends on the molar ratio of beryl to lithium compound. As mentioned above, the lithium content in the composite can be controlled by initial stoichiometry of the starting constituents. The lithium content in Li₄SiO₄ ceramic is 23.17 wt.% whereas the lithium content in an equimolar mixture of BeO and Li₄SiO₄ ceramics is 19.2%. The initial stoichiometry of the starting mixture was varied to produce composite having lithium content 10 to 19.6 wt. % . The lithium content (wt. %) in the composite as in Example 2 is ~12 %.

### ADVANTAGE OF THE INVENTION

The present invention provides a process for production of lithium-based tritium breeder material composite for breeder application. The process is simple and convenient for mass production. In the complete process for preparation, no reagent has been used other than the raw materials of the composite. The process does not generate any solid or liquid waste during processing of the breeder material and it is safe and environment friendly. Therefore, the process is a zero-waste process.

## Claims

1. A triphasic tritium breeder material composite comprising a first, a second and a third phases, **characterized in that** the first phase and the second phase comprise at least one lithium based inorganic compound, and the third phase comprises a lithium-beryllium based compound, wherein the first phase is 10 -30 % by wt. of the composite, the second phase is 20-50 % by wt. of the composite, and the third phase is 30-70% by wt. of the composite.

2. The triphasic tritium breeder material composite of claim 1, wherein the at least one lithium based inorganic compounds are selected from Li-aluminate, lithium ortho-silicate, lithium meta-silicate, lithium alumino-silicate.

3. The triphasic tritium breeder material composite of claim 1, wherein the first phase and the second phase comprising only lithium based inorganic compounds act as breeder materials

4. The triphasic tritium breeder material composite of claim 1, wherein the third phase comprising the compound containing both Lithium and Beryllium acts as both breeder material and neutron multiplier.

5. The triphasic tritium breeder material composite of claim 1, wherein the first phase comprises Li₄SiO₄, the second phase comprises LiAlSiO₄, and the third phase comprises Li₂BeSiO₄.

6. The triphasic tritium breeder material composite of claim 1, wherein the first phase is 16.72% by wt. of the composite, the second phase is 35.16% by wt. of the composite, and the third phase is 48.12% by wt. of the composite.

7. A process for preparing a triphasic tritium breeder material composite from lithium carbonate and Beryl (3BeO.Al₂O₃.6SiO₂) comprising the steps of:
(i) mixing Lithium carbonate and Beryl in a molar ratio between Beryl:Lithium carbonate ranging from about 1:1 to about 1:20 to obtain a mixture,
(ii) drying the mixture of step (i) to obtain a mixed powder,
(iii) compacting the mixed powder of step (ii) into a green pellet;
(iv) heating the green pellet of step (iii) at a temperature of 400-1400°C; and
(v) crushing the heat-treated pellet of step (iv) into granules to get the three phase composite.

## Patentansprüche

1. Dreiphasiger Tritiumbrütermaterial-Verbundstoff, der eine erste, eine zweite und eine dritte Phase aufweist, **dadurch gekennzeichnet, dass** die erste Phase und die zweite Phase mindestens eine anorganische Verbindung auf Lithiumbasis aufweisen und die dritte Phase eine Verbindung auf Lithium-Beryllium-Basis aufweist, wobei die erste Phase 10-30 Gew.-% des Verbundstoffs ausmacht, die zweite Phase 20-50 Gew.-% des Verbundstoffs ausmacht und die dritte Phase 30-70 Gew.-% des Verbundstoffs ausmacht.

2. Dreiphasiger Tritiumbrütermaterial-Verbundstoff nach Anspruch 1, wobei die mindestens eine anorganische Verbindung auf Lithiumbasis ausgewählt ist aus Lithiumaluminat, Lithiumorthosilikat, Lithiummetasilikat und Lithiumaluminosilikat.

3. Dreiphasiger Tritiumbrütermaterial-Verbundstoff nach Anspruch 1, wobei die erste Phase und die zweite Phase, die nur anorganische Verbindungen auf Lithiumbasis aufweisen, als Brütermaterialien wirken.

4. Dreiphasiger Tritiumbrütermaterial-Verbundstoff nach Anspruch 1, wobei die dritte Phase, die die Verbindung aufweist, die sowohl Lithium als auch Beryllium enthält, sowohl als Brütermaterial als auch als Neutronenvervielfacher wirkt.

5. Dreiphasiger Tritiumbrütermaterial-Verbundstoff nach Anspruch 1, wobei die erste Phase Li₄SiO₄, die zweite Phase LiAlSiO₄ und die dritte Phase Li₂BeSiO₄ aufweist.

6. Dreiphasiger Tritiumbrütermaterial-Verbundstoff nach Anspruch 1, wobei die erste Phase 16,72 Gew.-% des Verbundstoffs ausmacht, die zweite Phase 35,16 Gew.-% des Verbundstoffs ausmacht und die dritte Phase 48,12 Gew.-% des Verbundstoffs ausmacht.

7. Verfahren zur Herstellung eines dreiphasigen Tritiumbrütermaterial-Verbundstoffs aus Lithiumcarbonat und Beryll (3BeO.Al₂O₃.6SiO₂), das die folgenden Schritte umfasst:
(i) Mischen von Lithiumcarbonat und Beryll in einem molaren Verhältnis von Beryll:Lithiumcarbonat im Bereich von etwa 1:1 bis etwa 1:20, um eine Mischung zu erhalten,
(ii) Trocknen der Mischung aus Schritt (i), um ein gemischtes Pulver zu erhalten,
(iii) Verdichten des gemischten Pulvers aus Schritt (ii) zu einem Grünpellet;
(iv) Erhitzen des Grünpellets aus Schritt (iii) auf eine Temperatur von 400-1400°C; und
(v) Zerkleinern des wärmebehandelten Pellets aus Schritt (iv) zu Granulat, um den Dreiphasenverbundstoff zu erhalten.

## Revendications

1. Composite de matériau tritigène triphasique comprenant des première, deuxième et troisième phases, **caractérisé en ce que** la première phase et la deuxième phase comprennent au moins un composé inorganique à base de lithium, et la troisième phase comprend un composé à base de lithium-béryllium, dans lequel la première phase est de 10 à 30 % en poids du composite, la deuxième phase est de 20 à 50 % en poids du composite, et la troisième phase est de 30 à 70 % en poids du composite.

2. Composite de matériau tritigène triphasique selon la revendication 1, dans lequel l'au moins un composé inorganique à base de lithium est choisi parmi l'aluminate de lithium, l'orthosilicate de lithium, le métasilicate de lithium, l'aluminosilicate de lithium.

3. Composite de matériau tritigène triphasique selon la revendication 1, dans lequel la première phase et la deuxième phase comprenant uniquement des composés inorganiques à base de lithium agissent comme matériaux fertiles.

4. Composite de matériau tritigène triphasique selon la revendication 1, dans lequel la troisième phase comprenant le composé contenant à la fois du lithium et du béryllium agit à la fois comme matériau fertile et comme multiplicateur de neutrons.

5. Composite de tritigène triphasique selon la revendication 1, dans lequel la première phase comprend du Li₄SiO₄, la deuxième phase comprend du LiAlSiO₄, et la troisième phase comprend du Li₂BeSiO₄.

6. Composite de matériau tritigène triphasique selon la revendication 1, dans lequel la première phase est de 16,72 % en poids du composite, la deuxième phase est de 35,16 % en poids du composite, et la troisième phase est de 48,12 % en poids du composite.

7. Procédé de préparation d'un composite de matériau tritigène triphasique à partir de carbonate de lithium et de béryl (3BeO.Al₂O₃.6SiO₂) comprenant les étapes consistant à :
(i) mélanger du carbonate de lithium et du béryl dans un rapport molaire entre le béryl et le carbonate de lithium d'environ 1:1 à environ 1:20 pour obtenir un mélange,
(ii) sécher le mélange de l'étape (i) pour obtenir une poudre mélangée,
(iii) compacter la poudre mélangée de l'étape (ii) en une pastille verte ;
(iv) chauffer la pastille verte de l'étape (iii) à une température de 400 à 1400°C ; et
(v) écraser la pastille traitée thermiquement de l'étape (iv) en granules pour obtenir le composite triphasé.
